## Europäisches Patentamt

## European Patent Office

## Office européen des brevets

(19)

(11) Veröffentlichungsnummer: **0 167 175 B1**

(12)

# EUROPÄISCHE PATENTSCHRIFT

(45) Veröffentlichungstag der Patentschrift:
**24.05.89**

(51) Int. Cl.⁴: **G 01 N 21/07, B 04 B 5/04**

(21) Anmeldenummer: **85108376.6**

(22) Anmeldetag: **05.07.85**

(54) Vorrichtung zum Durchspülen einer in einem Feld befindlichen Substanz mit einem flüssigen Spülmittel in mehreren Spülvorgängen und zur Überführung des beim letzten Spülvorgang aus dem Feld austretenden Spülmittels in eine Küvette.

(30) Priorität: **06.07.84 DE 3425009**

(43) Veröffentlichungstag der Anmeldung.
**08.01.86 Patentblatt 86/2**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 073 512**
**FR-A- 2 200 513**
**US-A- 3 890 101**
**US-A- 3 899 296**
**US-A- 4 284 602**

(73) Patentinhaber: **BOEHRINGER MANNHEIM GMBH,
Patentabteilung. Abt. E Sandhofer
Strasse 112-132 Postfach 31 01 20,
D-6800 Mannheim 31 Waldhof (DE)**

(72) Erfinder: **Klose, Sigmar, Dr., Breitenloh 7,
D-8131 Berg 2 (DE)**
Erfinder: **Pasch, Manfred, Anton-Bartl-Strasse 7,
D-8132 Tutzing (DE)**
Erfinder: **Schlumberger, Helmut,
Kaiser-Heinrich-Strasse 23, D-8121 Polling (DE)**
Erfinder: **Kleemann, Wolfgang, Dr.,
Waxensteinstrasse 11, D-8132 Tutzing (DE)**
Erfinder: **Vieth, Friedhelm, Hauptstrasse 11,
D-8121 Haunshofen (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft eine Vorrichtung nach dem Oberbegriff des Anspruchs 1.

Aufgabe der Erfindung ist es, eine Vorrichtung dieser Art derart auszubilden, dass sie für den Flüssigkeitstransport keiner inneren beweglichen Teile bedarf und in ihrer Wirkungsweise durch Veränderung eines einzigen Parameters steuerbar ist.

Die Lösung dieser Aufgabe ist im Kennzeichen des Anspruchs 1 angegeben.

Ersichtlich hat die Vorrichtung keine inneren beweglichen Teile. Der einzige zu steuernde Parameter ist die Drehzahl des Rotors.

Ventilkammern im Sinne der vorliegenden Anmeldung sind in der Europäischen Patentanmeldung EP-A 0 073 512 beschrieben und dort «Mischventil» genannt. Eine Beschreibung von Aufbau und Wirkungsweise dieser Ventilkammern ist daher hier nicht erforderlich. Vielmehr wird auf die Europäische Patentanmeldung EP-A 0 073 512 Bezug genommen und deren Offenbarungsgehalt zum Offenbarungsgehalt vorliegender Anmeldung gemacht.

Besondere Ausführungsarten der Erfindung sind in den abhängigen Ansprüchen 2–14 angegeben.

Die Bedeutung der Unteransprüche ergibt sich aus der nachfolgenden Beschreibung eines Ausführungsbeispiels.

Die Funktion der Vorrichtung wird auch durch ihre Grenzflächeneigenschaften und Oberflächenbeschaffenheit beeinflusst. Diese Grenzflächeneigenschaften können durch Zusatz oberflächenaktiver Mittel, beispielsweise von Detergenzien, zur Flüssigkeit, zu den Vliesen oder zur Vorrichtung, beeinflusst werden.

Die Oberflächenbeschaffenheit kann beispielsweise durch Beschichten mit hydrophoben oder hydrophilen Materialien, Bestrahlen oder Aufrauhen verändert werden.

In den beigefügten Zeichnungen sind in den Fig. 1 bis 4 Seitenansichten (Fig. 3 und 4 nur im Bereich stromaufwärts der Dosierkammer) erfindungsgemässer Vorrichtungen dargestellt. Die einzelnen Hohlräume und ihre Verbindungen untereinander befinden sich zwischen zwei zusammensetzbaren Kunststoffteilen.

Die Vorrichtungen dienen zum Durchspülen einer in einem Feld d befindlichen Substanz mit einem aus einer Pumpenkammer PK kommenden flüssigen Spülmittel in mehreren Spülvorgängen und zur Überführung des beim letzten Spülvorgang aus dem Feld d austretenden Spülmittels in eine Küvette K. Das Feld d, die Pumpenkammer PK und noch weitere zu beschreibende Felder, Kammern und Leitungen befinden sich zwischen den beiden zusammengefügten Kunststoffteilen auf einem Rotor R, der mit veränderbarer Drehzahl um die Achse X–X zu drehen ist. Die Pumpenkammer PK befindet sich radial innerhalb des Feldes d zwischen den beiden Kunststoffteilen auf dem Rotor R. Die Pumpenkammer PK ist über eine sich unter der Wirkung der Zentrifugalkraft oberhalb einer vorgegebenen Drehzahl aus der Pumpenkammer PK füllende und unterhalb der vorgegebenen Drehzahl in das Feld d entleerende Ventilkammer VK2 mit dem Feld d verbunden. Das Feld d ist mit der Küvette K über eine Leitung 4 verbunden, die in einem Abschnitt 6, dessen Achse eine radial nach aussen weisende Komponente hat, in eine Abfallkammer AK gerichtet ist.

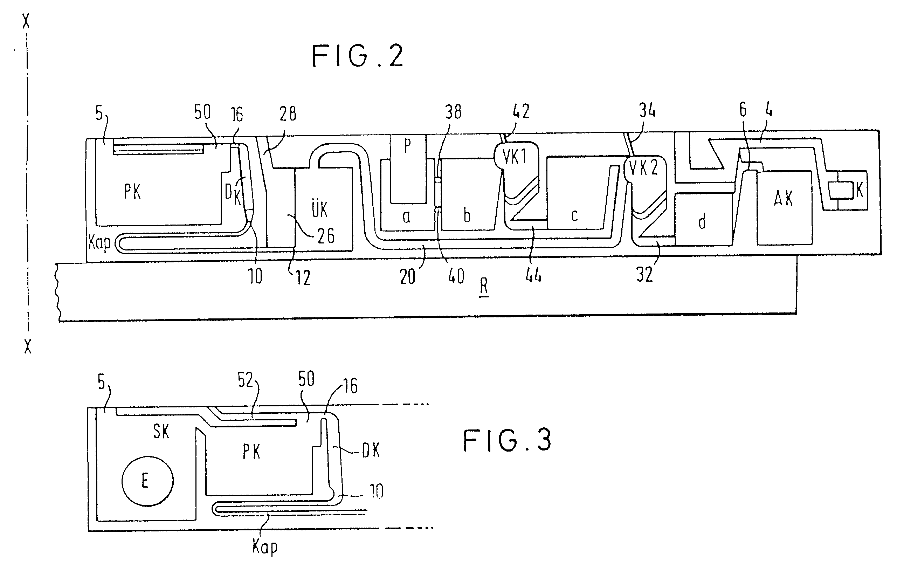

Die Pumpenkammer PK geht gegebenenfalls an ihrem radial inneren Ende oben in eine nach oben offene Substratelutionskammer SK (Fig. 3) über. Zwischen der Pumpenkammer PK und der Ventilkammer VK2 ist eine sich oberhalb einer vorgegebenen Drehzahl aus der Pumpenkammer PK mit einem vorgegebenen Volumen des Spülmittels füllende und unterhalb einer anderen vorgegebenen Drehzahl dieses Volumen des Spülmittels in die Ventilkammer VK2 überführende Dosierkammer DK geschaltet. Die Dosierkammer DK weist eine Auslaufkapillare Kap auf, deren Einlass 10 und Auslass 12 radial ausserhalb der Pumpenkammer PK liegen, deren Einlass 10 jedoch näher an der Pumpenkammer PK liegt als deren Auslass 12.

Die Dosierkammer DK ist mit der Pumpenkammer PK über eine als kapillare Abreissdrossel ausgebildete Leitung 16 verbunden, deren Einlass an eine radial äussere obere Ecke der Pumpenkammer PK angeschlossen ist.

Zwischen einem Vlies in der Pumpenkammer PK und der als kapillare Abreissdrossel ausgebildeten Leitung 16 befindet sich vorzugsweise ein nicht mit Vlies gefüllter Raum 50 von grösserem Querschnitt als die Leitung 16. Dieser Raum 50 ist bevorzugt mit einer luftzuführenden Stichleitung 52 verbunden, die eine Unterdruckbildung zwischen dem saugenden Vlies in der Pumpenkammer PK und der Flüssigkeit in der Dosierkammer DK beim Abreissvorgang verhindert.

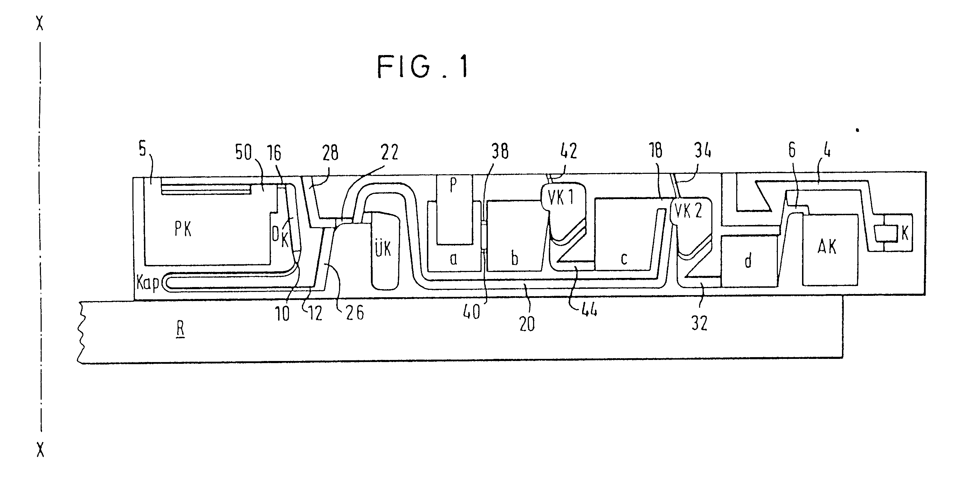

Von dem Auslass 12 führt nach Fig. 1 eine Leitung 26 über eine Kapillare 22 in eine Überlaufkammer ÜK. Die Leitung 26 ist nach oben hin durch eine Leitung 28 entlüftet.

Die Überlaufkammer ÜK ist mit der Ventilkammer VK2 durch eine Leitung 20 verbunden.

Die Ventilkammer VK2 ist mit dem Feld d durch eine Leitung 32 verbunden. Nach oben hin ist die Ventilkammer VK2 durch eine Stichleitung 34 entlüftet. Radial innerhalb der Ventilkammer VK2 liegen (radial von innen nach aussen) ein Feld a mit einer Probenauftragstelle P, ein Feld b, das mit dem Feld a durch zwei kurze Verbindungsleitungen 38, 40 verbunden ist, eine Ventilkammer VK1, die mit dem Feld b verbunden und nach oben hin durch eine Stichleitung 42 entlüftet ist, sowie ein Feld c, das über eine Einlassleitung 44 mit der Ventilkammer VK1 und über eine Auslassleitung 18 mit der Ventilkammer VK2 verbunden ist.

Für einfache Reaktionen bzw. unkritische Reagenzien kann auf das Feld b und/oder VK1 und Feld c verzichtet werden.

Bei dem im folgenden beschriebenen bevorzugten Ausführungsbeispiel wird die Vorrichtung zur Durchführung einer immunologischen Bestimmung nach dem EIA-Prinzip unter Verwendung einer gebundenen Phase benutzt. Die gebundene Phase, welche enzymmarkierten Antikörper in über zu bestimmendes Antigen gebundener und in freier Form enthält, wird mit einer als Waschflüssigkeit dienenden Substratlösung für das Markierungsenzym in mehreren Spülvorgängen ausgewaschen. Dies erfordert sehr kurze Spülzyklen und eine sorgfältige Trennung der Waschflüssigkeit von dem Anteil der Substratlösung, der beim letzten Spülvorgang als Messflüssigkeit dient.

Die Pumpenkammer PK wird mit Substratlösung gefüllt oder enthält das Substrat getränkt auf Vliesen. Der Vorteil der Verwendung von Substrat getrocknet auf Vliesen liegt in der besseren Stabilität des Trockenreagenzes gegenüber Lösungen und der einfacheren Bevorratung von nur einem Diluens für Probe und Substrat in der Vorrichtung. Nachteilig ist, dass bei Aufbringung des Substrats (+Puffer) auf die Vliese der Pumpenkammer PK sich bei Zugabe des Diluens ein Konzentrationsgradient bildet, der wegen der vorhandenen Vliese nicht abgebaut werden kann.

Dieser Nachteil wird beseitigt durch Vorschalten der Substratelutionskammer SK. Diese Kammer SK ist z.B. 3,5 mm tief und enthält ein Substratvlies von 1 mm Dicke, auf dem in konzentrierter Form die nötigen Mengen Substrat und Puffer in getrockneter Form aufgebracht wurden. Die Kammer SK enthält ferner eine z.B. mit Kunststoff beschichtete Eisenscheibe E von z.B. etwa 0,5 mm Dicke, die durch extern angeordnete Magnete bewegt werden kann. Nach Zugabe von Diluens (Aufgabestelle (5)) wird eine Elution von Substrat und Puffer vom Vlies erreicht sowie eine völlige Homogenisierung der Lösung. Bei der ersten Zentrifugation wird die Substratlösung in die Pumpenkammer PK und teils in die Dosierkammer DK befördert und verhält sich danach wie eine flüssige pipettierte Substratlösung. Dadurch können die Vorteile einer homogenen Lösung mit denen der besseren Stabilität und Diluens-Bevorratung verbunden werden.

Aufbau, Handhabung und Wirkungsweise der Vorrichtung sind in diesem Ausführungsbeispiel wie folgt:

Eine verdünnte Probe wird in ein Vlies in dem Feld a und ein Verdünnungsmittel wird in ein substrathaltiges Vlies in der Pumpenkammer PK eingeführt und der Rotor R in Umlauf gesetzt. Die verdünnte Probe löst aus einem Puffervlies in dem Feld b die erforderliche Puffermenge heraus, gelangt in die erste Ventilkammer VK1, wird von dort aus durch Senkung der Drehzahl des Rotors R in ein Konjugatvlies in dem Feld c überführt, löst aus diesem Konjugat heraus und gelangt in die zweite Ventilkammer VK2, wo eine Reaktion Antigen+Konjugat Antikörper-Enzym abläuft. Bei Herabsetzen der Drehzahl des Rotors R wird die Lösung aus der Ventilkammer VK2 in ein Trennvlies in dem Feld d gesaugt und kommt dort mit gebundenem Antikörper in Berührung. Hier werden die Komplexe Antigen-Konjugat AK-Enzym gebunden. Danach wird die Lösung mit dem nicht gebundenen Konjugat in die Abfallkammer AK geschleudert. Parallel dazu löst das Verdünnungsmittel aus dem substrathaltigen Vlies in der Pumpenkammer PK Substrat heraus. Die gebildete Substratlösung, die als Waschflüssigkeit dient, gelangt von dort in die Dosierkammer DK, wo eine genaue Dosierung erfolgt, dann teilweise in die Überlaufkammer ÜK oder direkt in die zweite Ventilkammer VK2 und dann zum Trennvlies in dem Feld d. Durch periodische Beschleunigung und Verzögerung des Rotors R wird die Waschflüssigkeit in den durch die Dosierkammer DK festgelegten Dosen, die im folgenden auch als «Schlucke» bezeichnet werden, aus dem Trennvlies in dem Feld d in die Abfallkammer AK zentrifugiert; ist die Abfallkammer AK gefüllt, wird eine Portion Substratlösung in die Küvette K geschleudert und dort gemessen.

Das Drehzahlprogramm des Rotors R sieht etwa so aus: Zur Dosierung jedes «Schlucks» wird zunächst die Drehzahl soweit erhöht, dass die Flüssigkeit aus dem in der Pumpenkammer PK befindlichen Vlies gegen die darin wirkenden Kapillarkräfte herausgeschleudert und über die Abreissdrossel 16 in die Dosierkammer DK transportiert wird. Dabei füllt sich die Auslaufkapillare Kap zunächst nur teilweise, weil in diesem Zustand die Kapillarkraft in dem nach radial innen gerichteten Teil der Auslaufkapillare Kap kleiner ist als die Zentrifugalkraft. Danach wird die Drehzahl soweit abgesenkt, dass in dem nach radial innen gerichteten Teil der Auslaufkapillare Kap die Kapillarkraft gegenüber der Zentrifugalkraft überwiegt. Dadurch wird die Auslaufkapillare Kap vollgesaugt, und gleichzeitig reisst die Flüssigkeitsverbindung zwischen der Dosierkammer DK und der Pumpenkammer PK im Bereich der Abreissdrossel 16 ab. Die Auslaufkapillare Kap füllt sich vollständig bis an ihren Auslass 12, wo die Flüssigkeit bei der erwähnten abgesenkten Drehzahl stehen bleibt. Somit steht in der Dosierkammer DK und in der Auslaufkapillare Kap ein bestimmtes Volumen an Flüssigkeit bereit. Dieses wird entleert, wenn man die Drehzahl erneut erhöht. Da nämlich der Auslass 12 radial weiter aussen liegt als der Einlass 10, wirkt die Auslaufkapillare Kap siphonartig im Zentrifugalkraftfeld. Bei dieser Drehzahlerhöhung ist darauf zu achten, dass sie nicht so hoch ist, dass bereits neue Flüssigkeit aus dem Vlies in der Pumpenkammer PK heraus in die Dosierkammer DK gelangt. Dies darf vielmehr erst der Fall sein, wenn die Dosierkammer DK entleert ist und zur Einleitung eines neuen Dosierzyklus die Drehzahl erneut wie anfangs beschrieben erhöht wird.

Bei der Ausführungsform nach Fig. 1 sollte am Ende der Kapillare ein nicht mit Vlies gefüllter, erweiterter Hohlraum vorhanden sein, der eine spontane Entleerung der Kapillare durch Kapillarkraft verhindert. Die Kapillare entleert sich dann erst, wenn bei Erhöhung der Drehzahl die Zentrifugalkraft höher ist als die Kapillarkraft. Der Hohlraum am Ende der Kapillare verhindert ausserdem, dass aus dem sich anschliessenden Vlies in der Überlaufkammer Flüssigkeit gegen die allgemeine Transportrichtung zurückgesaugt werden kann.

Bei der Ausführungsform nach Fig. 2 kann eine Entleerung von Dosierkammer DK und Auslaufkapillare Kap auch im Stillstand des Rotors R erfolgen, da die radial innere Seite der Überlaufkammer ÜK an den Auslass 12 der Kapillare Kap angrenzt. Ein Vlies in der Überlaufkammer ÜK saugt die aus der Dosierkammer DK kommende Flüssigkeit an, sobald sie die Kapillare Kap gefüllt hat. Bei einer solchen Ausführungsform ist es nicht notwendig, dass der Auslass der Kapillare Kap radial weiter auswärts als ihr Einlass liegt. Besonders vorteilhaft ist bei dieser Ausführungsform, dass bei niedriger Drehzahl des Rotors R die noch durchlaufenden «Schlucke» zurückgehalten werden.

Wichtig ist, dass die Flüssigkeitsäule in der Dosierkammer DK, welche z.B. exakt 29 µl Flüssigkeit fasst, zur Pumpenkammer PK hin sauber abreisst. Die kapillare Abreissdrossel 16 der Dosierkammer DK zur Pumpenkammer PK hin muss daher einen ganz bestimmten Durchmesser aufweisen, der von den Oberflächeneigenschaften der Substratlösung und des Wandmaterials abhängig ist.

Die Überlaufkammer ÜK enthält bevorzugt ein saugfähiges Medium, insbesondere Papier, um ein definiertes Volumen zu fixieren. Es ist auch möglich, einen gewöhnlichen Hohlraum vorzusehen, der über eine Kapillare 22 mit dem Auslass 12 der Dosierkammer DK verbunden ist. Der in einer solchen Kapillare 22 sich bildende Flüssigkeitspfropf verhindert dann einen Rücklauf von Substratlösung aus der Überlaufkammer ÜK in die Auslaufkapillare Kap der Dosierkammer DK. Eine Verhinderung dieses Rücklaufs durch ein saugfähiges Medium in der Überlaufkammer ÜK erwies sich jedoch als besser.

Der Abschnitt 6 der Leitung 4 zwischen dem das Trennvlies enthaltenden Feld d und der Abfallkammer AK muss so beschaffen sein, dass über seine Länge keine Kapillarkräfte wirksam sind. Nur so lässt sich verhindern, dass feine Tröpfchen der Substratlösung, die in die Abfallkammer AK gelangen sollen, die Abfallkammer AK umgehen und direkt in die Küvette K gelangen. Um dies zu erreichen, wird bevorzugt die Oberfläche dieses Abschnitts 6 mit einem Teflonschuppenbelag versehen. Diesen erhält man durch einen Teflonspray, der Teflon in äusserst feinteiliger Form enthält. Auf der Innenoberfläche des Abschnitts 6 bilden sich so winzige Teflonschuppen aus, die eine Hydrophobierung bewirken und zumindest ein Zurücklaufen von Tröpfchen verhindern. Unter gewissen Bedingungen kann auch eine in diesem Bereich erhöhte Oberflächenrauhigkeit der Innenoberfläche ausreichend sein.

Die erfindungsgemässe Vorrichtung schafft in einem Disposable auf einem Zentrifugal-Analysator die Möglichkeit, ohne Verwendung jeglicher mechanischer Teile hintereinander mehrere Schlucke Flüssigkeit herzustellen, deren Volumen genau festgelegt, insbesondere exakt reproduzierbar ist. Dies ist bei einem Disposable der hier beschriebenen Art insbesondere deshalb von Bedeutung, weil die Gesamtvolumen-Bilanz sehr genau stimmen muss. Die Abfallkammer vor der Küvette ist so zu füllen, dass sich in ihr vor dem letzten Waschschritt eine Flüssigkeitsmenge befindet, welche die Kammer innerhalb relativ enger Toleranzen sehr genau füllt, aber nicht aus der Abfallkammer überläuft. Die Toleranz der Füllung der Abfallkammer liegt dabei bei etwa 5%.

Die Pumpenkammer ist so gross zu gestalten, dass ihr Volumen einer Mehrzahl von Schlucken entspricht und mit Hilfe der Abreissdrossel, die mit dem in der Pumpenkammer enthaltenen Vlies zusammenwirkt, ein Abtrennen einzelner Schlucke möglich ist.

Bei einer hohen Drehzahl wird ein einheitlicher Flüssigkeitsstand (betrachtet in radialer Richtung) in der Pumpenkammer, in der Dosierkammer und in der Auslaufkapillare erzeugt.

Die Auslaufkapillare reicht radial soweit nach innen, dass sie dabei nicht vollständig auslaufen kann, also radial weiter nach innen als dem höchsten Flüssigkeitsstand in der Pumpenkammer entspricht. Beim Absenken der Drehzahl reisst die Flüssigkeit präzise an einer bestimmten Stelle zwischen der Dosierkammer und der Pumpenkammer ab. Das Volumen der Dosierkammer bis zur Abreissstelle und das entsprechende Teilvolumen der Auslaufkapillare bestimmen daher die Grösse des Schlucks. Im Bereich der Abreissdrossel wirken die gegenläufigen Saugkräfte einerseits in dem Vlies der Pumpenkammer (diese wirken entgegen der allgemeinen Flüssigkeitstransportrichtung) und andererseits in der Auslaufkapillare (diese wirken in der allgemeinen Flüssigkeitstransportrichtung). Dabei sind die Kräfteverhältnisse so, dass die Kapillarkräfte in dem Vlies erheblich grösser sind, als in der Auslaufkapillare. Infolgedessen würde bei Absenkung der Drehzahl ohne die Abreissdrossel die Flüssigkeit schnell in das Vlies zurückströmen. Jedoch ist der Strömungswiderstand der Abreissdrossel so bestimmt, dass in dem Moment, in dem das Zurückfliessen einsetzt, ein Abreissen an der entsprechenden Stelle erfolgt.

Um diese Funktion zu erfüllen, sind bevorzugt drei Massnahmen zu treffen:

- Die Abreissdrossel muss einen hinreichend grossen Strömungswiderstand haben. Dieser wird durch die Eigenschaften der Flüssigkeit, beispielsweise Viskosität oder Grenzflächeneigenschaft, die Oberflächenbeschaffenheit und den Querschnitt der Abreissdrossel festgelegt. Besonders bevorzugte Massnahmen zur geeigneten Veränderung der Grenzflächeneigenschaften und/oder der Fliesseigenschaften im Bereich der Abreissdrossel sind weiter oben beschrieben.

- Der Abreissdrossel in Richtung auf die Pumpenkammer vorgelagert sollte ein nicht mit Vlies gefüllter Raum sein, dessen Querschnitt grösser ist als der der Abreissdrossel.

- Eine Luftzuführung (52) sollte vorhanden sein, durch die das beim Zurückströmen der Flüssigkeit vor der Abreissdrossel entstehende Hohlvolumen gefüllt wird; mit anderen Worten: der Raum zwischen Vlies und Abreisskante muss belüftet sein.

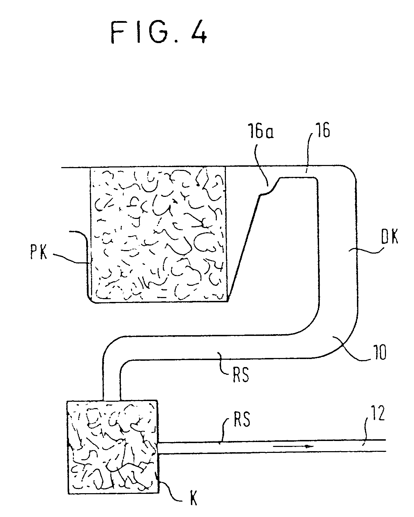

Bei der Ausführungsform nach Fig. 4 ist die Pumpenkammer PK mit der Dosierkammer DK über eine als kapillare Abreissdrossel ausgebildete Leitung 16 verbunden, die einen erweiterten Einlassabschnitt 16a aufweist. Die Pumpenkammer PK ist kapillar aktiv ausgebildet und enthält hierzu bevorzugt ein Vlies. Die Dosierkammer DK geht in diesem Fall ohne erkennbaren Übergang im Bereich 10 in einen Auslaufkanal RS über. Der Auslaufkanal RS führt in Richtung der Rotationsachse X-X des Rotors R bis zu einer Stelle, die näher an der Rotationsachse X-X liegt als die Flüssigkeitsoberfläche in der Pumpenkammer PK während der Rotation des Rotors R mit einer ersten erhöhten Drehzahl und führt dann radial von der Rotationsachse X-X fort. Im radial inneren Bereich führt der Auslaufkanal RS durch eine Kammer K, in der sich ein Saugvlies befindet.

Bei der Ausführungsform nach Fig. 4 sind die Flüssigkeitsdosen, die durch den Auslaufkanal RS abgeführt werden, zwar grösser als in dem vorangehend beschriebenen Ausführungsbeispiel, bei dem der Auslaufkanal RS kapillar ausgebildet und daher mit Kap bezeichnet ist. Da wie weiter oben erwähnt, die Grösse eines Schlucks nicht nur durch das Volumen der Dosierkammer, sondern auch durch das während der ersten erhöhten Drehzahl gefüllte Teilvolumen des Auslaufkanals bestimmt wird, sind die Unterschiede im Volumen der einzelnen Schlucke um so grösser, je grösser der Querschnitt des Auslaufkanals ist. Für viele Anwendungszwecke kommt es aber auf eine besondere Gleichmässigkeit der Dosen nicht an, sondern nur darauf, dass die Gesamtdosis aus einer Mehrzahl von Dosen mit hinreichender Genauigkeit reproduzierbar die gleiche ist. Für einen solchen Anwendungszweck ist die Ausführungsform gemäss Fig. 4 besonders geeignet.

Für die Funktion ist wesentlich, dass der Auslaufkanal RS aus der Dosierkammer DK so geführt ist, dass mindestens ein Teil von ihm radial näher an der Rotationsachse X-X des Rotors R liegt als die Flüssigkeitsoberfläche in der Pumpenkammer PK während einer Rotation mit einer ersten erhöhten Drehzahl. Bei einer nicht kapillarförmigen Gestaltung des Auslaufkanals RS fliesst die Flüssigkeit nur auf Grund der Schwerkraft aus der Dosierkammer, wenn die Drehzahl auf einen zweiten, niedrigeren Wert abgesenkt wird. Sie wird von dem Vlies in der Kammer K aufgesaugt. Alternativ oder zusätzlich kann auch hier der Auslaufkanal wie in Fig. 1 so gestaltet sein, dass sein Auslass radial auswärts der Dosierkammer liegt.

## Patentansprüche

1. Vorrichtung zur dosisweisen Überführung von Flüssigkeit aus einer auf einem mit vertikaler Drehachse (X-X) mit veränderbarer Drehzahl in Umlauf zu setzendem Rotor (R) angeordneten, in einem Block ausgebildeten, mit einer Füllöffnung (5) versehenen ersten Kammer (PK) in eine auf dem Rotor (R) radial ausserhalb der ersten Kammer (PK) in dem Block ausgebildete zweite Kammer (ÜK), wobei das Volumen der ersten Kammer (PK) wesentlich grösser ist als das Volumen der zweiten Kammer (ÜK), dadurch gekennzeichnet, dass die erste Kammer (PK) auf ihrer der zweiten Kammer (ÜK) zugewandten Seite oben über eine kapillare Drossel (16) mit einer sich im wesentlichen nach unten erstreckenden, in dem Block zwischen der ersten Kammer (PK) und der zweiten Kammer (ÜK) ausgebildeten Dosierkammer (DK) verbunden ist, und dass die Dosierkammer (DK) unten mit einem Einlass (10) einer sich U-förmig radial nach innen bis unter die erste Kammer (PK) und dann radial nach aussen erstreckenden, in dem Block ausgebildete Kapillarleitung (Kap; RS, K) verbunden ist, die einen zu der zweiten Kammer (ÜK) führenden, radial nach aussen weiter entfernt von der Drehachse (X-X) als ihr Einlass (10) liegenden Auslass (12) aufweist.

2. Vorrichtung nach Anspruch 1, dadurch gekennzeichnet, dass sich in der ersten Kammer (PK) ein Saugvlies befindet.

3. Vorrichtung nach Anspruch 1 oder 2, dadurch gekennzeichnet, dass die zweite Kammer (ÜK) über eine von ihrer Oberseite ausgehende, in dem Block ausgebildete erste Leitung (20, 32) mit einer radial ausserhalb der zweiten Kammer (ÜK) in dem Block ausgebildeten, ein Saugvlies enthaltenden dritten Kammer (d) verbunden ist, die über einen schräg aufwärts radial nach aussen verlaufenden, radial innen entlüfteten Leitungsabschnitt (6) mit der Oberseite einer in dem Block radial ausserhalb der dritten Kammer (d) ausgebildeten vierten Kammer (AK) verbunden ist.

4. Vorrichtung nach Anspruch 3, dadurch gekennzeichnet, dass der Leitungsabschnitt (6) quer zur Radialebene kapillar eng, in der Radialebene aber nichtkapillar weit ist und dass von dem oberen Ende des Leitungsabschnitts (6) eine in dem Block ausgebildete zweite Leitung (4) zu einer radial ausserhalb der vierten Kammer (AK) in dem Block ausgebildeten fünften Kammer (K) verläuft.

5. Vorrichtung nach einem der vorstehenden Ansprüche, dadurch gekennzeichnet, dass die kapillare Drossel (16) einen erweiterten Einlassabschnitt (16a) aufweist.

6. Vorrichtung nach einem der vorstehenden Ansprüche, dadurch gekennzeichnet, dass die Kapillarleitung (RS, K) durch eine mit einem Saugvlies gefüllte Kammer (K) geführt ist.

7. Vorrichtung nach einem der Ansprüche 2 bis 6, dadurch gekennzeichnet, dass sich zwischen dem Saugvlies in der ersten Kammer (PK) und der kapillaren Drossel (16) ein freier Raum (50) befindet, dessen Querschnitt grösser ist als der Querschnitt der kapillaren Drossel (16).

8. Vorrichtung nach Anspruch 7, dadurch gekennzeichnet, dass in dem Raum (50) eine luftzuführende Stichleitung (52) mündet.

9. Vorrichtung nach einem der vorstehenden Ansprüche, dadurch gekennzeichnet, dass sich in der zweiten Kammer (ÜK) ein Saugvlies befindet.

10. Vorrichtung nach einem der Ansprüche 3 bis 9, dadurch gekennzeichnet, dass der Leitungsabschnitt (6) innenseitig aufgerauht oder hydrophobiert ist.

11. Vorrichtung nach einem der Ansprüche 3 bis 10, dadurch gekennzeichnet, dass der Leitungsabschnitt (6) innenseitig mit Teflonschuppen belegt ist.

12. Vorrichtung nach einem der vorstehenden Ansprüche, dadurch gekennzeichnet, dass radial innerhalb der ersten Kammer (PK) in dem Block eine mit der ersten Kammer (PK) verbundene, ein Substratvlies enthaltende sechste Kammer (SK) ausgebildet ist.

13. Vorrichtung nach Anspruch 12, dadurch gekennzeichnet, dass sich in der sechsten Kammer (SK) ein Rührwerkzeug (E) befindet.

14. Vorrichtung nach Anspruch 13, dadurch gekennzeichnet, dass das Rührwerkzeug (E) einen durch ein externes Magnetfeld bewegbaren Bestandteil aufweist.

## Claims

1. Device for the dosewise transfer of liquid from a first chamber (PK), arranged on a rotor (R) with vertical axis of rotation (X–X) to be set in rotation with variable speed of rotation, formed in a block with a filling opening (5) into a second chamber (ÜK) formed in block on the rotor (R) radially outside the first chamber (PK), whereby the volume of the first chamber (PK) is substantially greater than the volume of the second chamber (ÜK), characterised in that the first chamber (PK) is connected on its side facing the second chamber (ÜK) via a capillary throttle (16) with a dosage chamber (DK), extending substantially downwardly, formed in the block between the first chamber (PK) and the second chamber (ÜK) and that the dosage chamber (DK) is connected below with the inlet (10) of a capillary tube (Kap; RS, K), formed in the block extending radially inwardly up to under the first chamber (PK) and then radially outwardly, which has an outlet (12) leading to the second chamber (ÜK), radially outwardly further removed from the axis of rotation (X–X) than its inlet (10).

2. Device according to claim 1, characterised in that an absorbent fleece is present in the first chamber (PK).

3. Device according to claim 1 or 2, characterised in that the second chamber (ÜK) is connected via a first pipe (20, 32) starting from its upper surface and formed in the block with a third chamber (d), formed radially outside the second chamber (ÜK) in the block, which, via an obliquely upwardly radially outwardly running, radially inwardly vented pipe section (6), is connected with the upper side of a fourth chamber (AK) formed in the block radially outside the third chamber (d).

4. Device according to claim 3, characterised in that the pipe section (6) is capillary narrow transversely to the radial plane but in the radial plane is noncapillary and that, from the upper end of the pipe section (6), a second pipe (4) formed in the block runs to a fifth chamber (K) formed in the block radially outwardly of the fourth chamber (AK).

5. Device according to one of the preceding claims, characterised in that the capillary throttle (16) has a widened inlet section (16a).

6. Device according to one of the preceding claims, characterised in that the capillary tube (RS, K) is passed through a chamber (K) filled with an absorbent fleece.

7. Device according to one of claims 2 to 6, characterised in that between the absorbent fleece in the first chamber (PK) and the capillary throttle (16) is present a free chamber (50), the cross-section of which is greater than the cross-section of the capillary throttle (16).

8. Device according to claim 7, characterised in that an air-inletting tap line 52 opens into the chamber (50).

9. Device according to one of the preceding claims, characterised in that an absorbent fleece is present in the second chamber (ÜK).

10. Device according to one of claims 3 to 9, characterised in that the pipe section (6) is roughened or hydrophobed on the inside.

11. Device according to one of claims 3 to 10, characterised in that the pipe section (6) is covered with Teflon flakes on the inside.

12. Device according to one of the preceding claims, characterised in that, radially inside the first chamber (PK), in the block there is formed a sixth chamber (SK) containing substrate fleece connected with the first chamber (PK).

13. Device according to claim 12, characterised in that in the sixth chamber (SK) is present a stirring mechanism (E).

14. Device according to claim 13, characterised in that the stirring mechanism (E) has a component movable by an external magnetic field.

## Revendications

1. Dispositif pour le transfert dosé d'un fluide, à partir d'une première chambre (PK) qui est ménagée dans un bloc, est percée d'un orifice d'emplissage (5) et est disposée sur un rotor (R) à axe vertical de rotation (X–X), devant être mis en rotation à une vitesse angulaire variable, jusqu'à une seconde chambre (ÜK) qui est ménagée dans ledit bloc, sur le rotor (R), radialement en dehors de la première chambre (PK), le volume de la première chambre (PK) étant substantiellement plus grand que le volume de la seconde chambre (ÜK), caractérisé par le fait que la première chambre (PK) est reliée en partie haute par l'intermédiaire d'un étranglement capillaire (16), sur son côté tourné vers la seconde chambre (ÜK), à une chambre de dosage (DK) qui s'étend pour l'essentiel vers le bas et est ménagée, dans le bloc, entre la première chambre (PK) et la seconde chambre (ÜK); et par le fait que la chambre de dosage (DK) est reliée, en partie basse, à une entrée (10) d'un conduit capillaire (Kap; RS, K) qui est ménagé dans le bloc, s'étend en forme de U, radialement vers l'intérieur jusqu'au-dessous de la première chambre (PK), puis radialement vers l'extérieur, et présente une sortie (12) gagnant la seconde chambre (ÜK) et davantage éloignée de l'axe de rotation (X–X) que son entrée (10), vers l'extérieur dans le sens radial.

2. Dispositif selon la revendication 1, caractérisé par le fait qu'une carde absorbante se trouve dans la première chambre (PK).

3. Dispositif selon la revendication 1 ou 2, caractérisé par le fait que la seconde chambre (ÜK) est reliée, par l'intermédiaire d'un premier conduit (20, 32) ménagé dans le bloc et partant de sa face supérieure, à une troisième chambre (d) qui renferme une carde absorbante, est ménagée dans le bloc radialement en dehors de la seconde chambre (ÜK) et est reliée, par l'entremise d'un tronçon de conduit (6) ventilé radialement vers l'intérieur et s'étendant à l'oblique vers le haut, radialement vers l'extérieur, à la face supérieure d'une quatrième chambre (AK) ménagée, dans le bloc, radialement en dehors de la troisième chambre (d).

4. Dispositif selon la revendication 3, caractérisé par le fait que le tronçon de conduit (6) est étroit avec effet capillaire, transversalement par rapport au plan radial, mais est large et sans effet capillaire dans le plan radial; et par le fait qu'un second conduit (4), ménagé dans le bloc, part de l'extrémité supérieure du tronçon de conduit (6) et s'étend jusqu'à une cinquième chambre (K) ménagée, dans le bloc, radialement en dehors de la quatrième chambre (AK).

5. Dispositif selon l'une des revendications précédentes, caractérisé par le fait que l'étranglement capillaire (16) présente un tronçon d'admission élargi (16a).

6. Dispositif selon l'une des revendications précédentes, caractérisé par le fait que le conduit capillaire (RS, K) traverse une chambre (K) emplie d'une carde absorbante.

7. Dispositif selon l'une des revendications 2 à 6, caractérisé par le fait que la carde absorbante située dans la première chambre (PK) et l'étranglement capillaire (16) sont séparés par un espace libre (50), dont la section est plus grande que la section de l'étranglement capillaire (16).

8. Dispositif selon la revendication 7, caractérisé par le fait qu'un conduit de repiquage (52) délivrant de l'air débouche dans l'espace (50).

9. Dispositif selon l'une des revendications précédentes, caractérisé par le fait qu'une carde absorbante se trouve dans la seconde chambre (ÜK).

10. Dispositif selon l'une des revendications 3 à 9, caractérisé par le fait que le tronçon de conduit (6) est rendu rugueux ou hydrophobe à sa face interne.

11. Dispositif selon l'une des revendications 3 à 10, caractérisé par le fait que le tronçon de conduit (6) est garni d'écailles de Téflon à sa face interne.

12. Dispositif selon l'une des revendications précédentes, caractérisé par le fait qu'une sixième chambre (SK), reliée à la première chambre (PK) et renfermant une carde à substrat, est ménagée dans le bloc radialement à l'intérieur de la première chambre (PK).

13. Dispositif selon la revendication 12, caractérisé par le fait qu'un outil agitateur (E) se trouve dans la sixième chambre (SK).

14. Dispositif selon la revendication 13, caractérisé par le fait que l'outil agitateur (E) présente un élément constitutif pouvant être mis en mouvement par un champ magnétique extérieur.

FIG. 1

FIG.2

FIG.3

# FIG. 4